# EUROPEAN PATENT SPECIFICATION

(11) **EP 4 212 264 B1**
(45) Date of publication and mention of the grant of the patent: **02.04.2025**
(21) Application number: 22158357.8
(22) Date of filing: 23.02.2022
(51) Int. Cl.: B22D 1/00, B22D 41/00, C22B 9/02, B01D 19/00, B01F 31/86, B22D 39/02

(54) **DEVICE FOR ULTRASONIC TREATMENT AND TRANSFER OF MOLTEN METAL AND METHOD THEREOF**
VORRICHTUNG ZUR ULTRASCHALLBEHANDLUNG UND ÜBERTRAGUNG VON GESCHMOLZENEM METALL UND VERFAHREN DAFÜR
DISPOSITIF DE TRAITEMENT ET DE TRANSFERT DE MÉTAL EN FUSION PAR ULTRASONS ET PROCÉDÉ ASSOCIÉ

(30) Priority: 13.01.2022 PT 2022117737
(43) Date of publication of application: 19.07.2023
(73) Proprietor: Universidade do Minho, 4704-553 Braga (PT)
(72) Inventor: JESUS FERNANDES PUGA, Hélder, 4780-510 Santo Tirso (PT)
(74) Representative: Patentree

(56) References cited:
- CN-A- 108 687 669
- JP-A- 2011 200 883
- KR-A- 20090 048 617
- US-B1- 10 233 515
- US-B2- 9 061 928

## Description

### TECHNICAL FIELD

The present disclosure relates to the non-ferrous alloys molten meltal treatment. It relates to a device for transferring molten metal by a user and method thereof. Particularly, relates to ladle assisted by ultrasounds during transfer of alloy melt, providing a reliable and straightforward molten metal treatment method with significant improvement on the mechanical properties as the consequence of porosity reduction and microstructure refinement of the component poured.

### BACKGROUND

Typically, two main impurities are present in molten aluminium, non-metallic inclusions and dissolved hydrogen. Hydrogen is the main gas porosity source in aluminium castings since it is the only gas with significant solubility in molten aluminium. In liquid aluminium, the solubility of hydrogen is very high and it increases with melt temperature. However, a significant change in solubility occurs at the freezing point, which drops from approximately 0,7 ml H₂/100 mg Al in the liquid to about 0,03 ml H₂/100 mg Al in the solid state. For this reason, the hydrogen content of a molten alloy must be kept as low as possible, especially when dealing with high-strength casting alloys.

Depending on the alloy and its cooling rate, hydrogen can originate sufficient gas porosity to reduce the mechanical properties, resistance to corrosion and hot tearing. Due to the low cooling rate, hydrogen dissolved in the liquid contributes to a high level of porosity of castings in sand gravity casting.

The amount of porosity tolerated in casting is determined by the method of casting and the component specification.

In liquid aluminium, hydrogen is present in atomic form. To be removed, hydrogen atoms must combine to form hydrogen gas molecules, although this is a complex mechanism.

Traditionally, to resolve this problem, a free hydrogen gas (e.g., argon, nitrogen) is introduced under pressure in the liquid metal in the form of tiny bubbles, for which the hydrogen atoms can migrate and spread by processing the transformation in hydrogen gas spontaneously within the inert gas bubble, with subsequent transport to the surface of the melt, being removed. This process can be summarized in the following steps: (i) transport of hydrogen atoms towards the surface of inert gas bubbles through a combined process of diffusion and convection; (ii) adsorption of hydrogen on the surface of the bubbles; (iii) reaction of the hydrogen to form hydrogen gas molecules, and diffusion into the interior of bubbles; (iv) escape of bubbles to the surface of the melt. In addition, non-metallic solid particles are swept to the surface by the floating effect created by the bubbles introduced under pressure in the liquid metal, being after skimmed off. This process is referred to as "metal degassing".

Several apparatus and methods have been proposed during the years to treat non-ferrous alloys molten metals. For example, document US6887424B2 describes an inline degassing apparatus used for continuous degassing of non-ferrous metal such as aluminium and magnesium alloys. Document US5660614A discloses a method and apparatus to treat molten metals with gas before casting or other processes involving metal cooling and solidification. However, this kind of apparatus and methods for molten metal degassing have reduced efficiency during the years and promotes slag formation that needs to be disposed or inertized. Other examples of "metal degassing" using gas diffusion plates or similar devices to create the desired gas/metal contact can be found in documents US4290590, CN101568397A or EP0786015A1. However, bubbles produced with those apparatus still tend to be too large, and, given the volume to process, the treatment time necessarily must be made undesirably long to achieve effective degassing, and the volume of gas introduced must be made relatively high. In order to overcome the drawbacks prior referred, the document US6689310B1 discloses a new variant of molten metal degassing by use of an impeller device. The device comprises an impeller and a shaft having a first and a second end, later connected to the impeller able to efficiently mix gas into molten metal promoting clean of the bath by the capacity to distribute the gas bubbles by whole molten metal volume. However, depending on the type of gas used and impeller rotation, the formed slag may or may not be inert and presents a significant environmental impact with a high additional cost for businesses. In addition, the apparatus takes up significant floor space and the volume of gas introduced as the processing time promotes a loss of metal temperature, which need to be compensated through other systems to ensure the complete filling of the mould cavity.

Several problems are associated with "metal degassing" prior art devices and methods that make them relatively inefficient to disperse the refined bubbles gas into the molten metal bath. The above evidence led to the search for other solutions. In this sense, molten metal degassing using physics mechanisms (e.g., ultrasound, electromagnetic, stirring) have been proposed.

For example, the document US5462572A suggests an inductive stirring of melt applying a low-frequency magnetic able to promote refining, degassing, alloying, holding, or casting of melt. However, this kind of method needs a proper apparatus with specific conditions in Foundry.

"Metal degassing" using the ultrasound technique has been explored during the last decade. Some examples of ultrasonic non-ferrous alloy degassing are traditionally carried out directly on the molten metal (e.g., documents US7682556B2 ,RU2719820C1, CN101418381B, CN101435064B, US10233515B1), and indirectly at the walls of the containers in which the melts are located (e.g., EP0403411A, KR101449018B1). Regardless of the device, the efficiency of molten metal degassing assisted by ultrasound depends on the transferring method of vibration to liquid. However, it is recognized that the best way to treat molten metal by ultrasound is through direct contact between the acoustic radiator and the liquid.

The main disadvantage of using this technique, ultrasonic degassing, comes from the high temperature that tends to change the acoustic properties of the radiator and thus the resonant frequency shift. The exposure of radiator metal to long periods of acoustic treatment is another drawback with direct consequences on its erosion, affecting casting quality. Several solutions are being developed to transfer acoustic vibration directly to the molten metal, such as using ceramic radiators to overtake such issues. Nevertheless, the attenuation of vibration leads to a complex design of ultrasonic systems to compensate for the loss of vibration in high molten metal volumes being impractical for foundries where the lack of engineering knowledge is a reality.

The refinement of non-ferrous alloys is traditionally made recurring to chemical agents added to the molten metal by different devices. The document US6073677A disclosing a method to optimize the grain refinement of aluminium alloys is an excellent example of this kind of chemical refinement. However, most of the chemical agents used are harmful in alloy recycling, present low efficiency due to fading phenomena and trend to increase the level of dissolved gas into the molten metal (changes in the superficial tension), resulting in a moderate impact on the mechanical properties of alloy recycling casting. Besides, the refinement of molten metal alloy recurring to chemical agents is inefficient, uneven, labour-intensive and limited by the processing time and temperatures.

The use of physical processes to molten metal treatment presents limitations yet due to the temperature of processing involved. For instance, to promote grain refinement of matrix by ultrasound technique, the processing temperatures must be closer to the *liquidus,* which is a problem to fill the mould cavity with molten metal.

The document KR20090048617 discloses a waveguide assembly provided for imparting ultrasonic energy to a glass melt at an amplitude sufficient to produce acoustic streaming in the melt, thereby mixing the molten glass. The glass melt may, for example, be flowing through a refractory metal vessel. In one configuration the waveguide assembly includes a waveguide acoustically coupled to a transducer at one end and the glass melt at the other end. The waveguide may be physically coupled to the vessel via a threaded fitting attached to an outside surface of the vessel.

The document CN108687669 discloses a liquid circulating device for ultrasonic cavitation assisted stirring magnetorheological polishing fluid, and belongs to the technical field of magnetorheological polishing. The liquid circulating device comprises a liquid storage tank, an ultrasonic cavitation system and a stirrer, wherein the ultrasonic cavitation system comprises an ultrasonic generator, a piezoelectrictransducer, an amplitude-change pole, a step circular disc and a vibrating cylinder; the upper surface of the step circular disc is equipped with a step with height equal to half-wavelength of the magnetorheological polishing fluid; the lower end of the vibrating cylinder is connected with the upper end of the step at the outermost side of the step circular disc, length of the vibrating cylinder is integral multiple the have-wavelength of the magnetorheological polishing fluid, and the outer wall of the vibrating cylinder is coated with a sound absorbing material; the input end of the piezoelectric transducer is connected with the ultrasonic generator; the output end of the piezoelectric transducer is connected with the amplitude-change pole; and the amplitude-change pole is connected withthe step circular disc.

The document JP2011200883 discloses a casting apparatus which can apply sufficient ultrasonic vibration effect to a molten metal injected into a plunger sleeve. In the casting apparatus includs a ladle which transports the molten metal of an alloy material from a melting furnace to the plunger sleeve and injects the molten metal into the plunger sleeve, the ladle includes an ultrasonic vibrating device including an ultrasonic vibrator generating ultrasonic vibration and an ultrasonic vibration horn radiating vibration from the ultrasonic vibrator in an amplified manner, the ultrasonic vibration horn applies ultrasonic vibration to the molten metal drawn up by the ladle.

Thus, there is a need to develop a molten metal treatment apparatus and method that provides effective treatment in short periods, corresponding precisely to the volume of metal to fill the mould cavity.

These facts are disclosed in order to illustrate the technical problem addressed by the present disclosure.

### GENERAL DESCRIPTION

The invention is defined by a device and method as defined in claims 1 and 15, respectively.

Several methods aim to transfer acoustic energy into a bath of molten metal; however, none of these methods is affordable and susceptible to be applied in industrial casting because there is no acoustic radiator material available to support high temperatures without suffering erosion. Furthermore, the acoustic transmission range has limitations due to the attenuation effect caused by the viscosity of the molten metal, further the cavitation effect.

The present disclosure relates to an ultrasonic-assisted ladle for transfer of the alloy applied to non-ferrous alloys' melt treatment and method thereof.

It is disclosed a ladle using ultrasonic vibration when transferring alloy melt from a crucible to a mould, the steps of melt degassing, microstructure refining, and addition of micro/nanoparticles. A transducer produces the ultrasonic vibration, preferably a piezoelectric transducer, which is transferred through a booster and a waveguide properly designed and directly applied to the ladle, which contains the liquid metal, creating cavitation bubbles. In another embodiment, an inert purge gas is intentionally supplied through a channel designed adequately in the waveguide, enhancing the cavitation bubbles number involving the entire molten metal volume. The combined effects result in a fast step of degassing and refinement, directly applicable in the gravity casting process.

The ultrasonic-assisted ladle for transfer of the alloy applied to non-ferrous alloys' melt treatment can result in metals purification; microstructure refinement; structure modification providing a better and faster melt homogenization, optimized alloying and microalloying, wetting of non-metallic inclusions and significant alloy density increase; and degassing, based on the specifically created acoustic field introduced in molten metal in order to create spatially and uniformly well distributed and wideband multi-frequency cavitation.

The present disclosure relates to a novel, reliable and feasible apparatus and method to transfer the molten metal alloy from a crucible or furnace to a mould cavity using a ladle assisted by ultrasound. In an embodiment, the device transfers the molten metal from a holding furnace which is a small furnace for holding molten metal produced in a larger melting furnace at a desired temperature for casting. One of its objectives is to provide a simple and affordable way for foundrymen to proceed with the treatment during pouring, combining degassing and matrix refinement in a single step, which can be applied directly to the conventional Foundry and casting without implying any additional expenses.

In an embodiment, the device provides a molten metal ultrasonic treatment during the transfer from a crucible or furnace to the mould cavity, i. e. the ultrasonic treatment is made directly in the ladle during the pouring stage, providing, therefore, a novel ladle comprising a piezoelectric transducer connected directly to the handle.

With the present disclosure, the metal will be continuously vibrated during the pouring stage, which is one of the many advantages of this ladle and method, avoiding metal turbulence and consequently the appearance of porosity or inclusions. Therefore, the propagation of acoustic energy to the molten metal is done directly through a ladle interface, allowing pouring the melt at temperatures usually used in industry and more suitable to industrial practice implementation.

In the first moment of ultrasonic molten metal treatment, during the time elapsed between collection of molten metal from crucible or furnace and the pouring stage, the apparatus acts as a degasser favouring the cleanness of the melt. After this moment, the induced acoustic activity into molten metal will survive during a certain time, also known as acoustic memory, travelling with molten metal flux throughout the mould cavity. The surviving bubbles will collapse, developing acoustic streaming throughout the melt, distributing the nuclei into the surrounding liquid producing a significant number of nuclei in the molten alloy, which acoustically stimulated will favour the micro and nano crystallization. If a solid volume fraction is already present in the melt, the first dendritic grains can be broken and distributed in the liquid metal, acting as new nuclei and promoting a high density of globular grain.

Degassing is easier and faster if melt temperature is higher than the optimal temperature for grain refinement, but microstructure refinement is ineffective at such high temperatures. Thus, with the apparatus of the present disclosure, combining the referred two moments ensures the matrix's homogeneity, improving the mechanical properties by porosity reduction and microstructure refinement of the component poured.

It also allows a simple manufacturing of the device, with a reduced number of components, operating with low voltage, not subject to high temperature, without significant variation of resonance frequency and affordable to any foundrymen and Foundry that is practicing rather gravity die casting or gravity sand/ceramic mould.

The scope of the present invention is defined by independent claims 1 and 15, and further embodiments of the invention are specified in dependent claims 2-14.

In an embodiment, the device comprises a gas source, the gas is selected from argon or nitrogen.

In an embodiment, the gas comprises micro or nanoparticles at a range from 0.1 to 5 % by weight of molten metal volume.

In an embodiment, the micro or nanoparticles are selected from Silicon carbide (SiC), Titanium carbide (TiC), Boron carbide (B4C) or Aluminium Oxide (Al₂O₃) or their mixtures.

In an embodiment, the internal channel has a diameter 2 to 10 mm, preferably 3 to 6 mm, more preferably 4 mm.

In an embodiment, the cooling ring comprises an air pressure for cooling the waveguide.

In an embodiment, the cooling ring is made of steel, preferably stainless steel.

In an embodiment, the ladle is made of steel, preferably stainless steel, preferably stainless steel 1.4749, Ti6Al4V or high-temperature refractory materials, preferably Sialon.

In an embodiment, the ladle is coated with silicon-nitride plasma coating or Boron Nitride coating.

In an embodiment, the device comprises two grips, preferably arranged with the waveguide in-between the two grips, preferably arranged around the boosters, more preferably around nodal planes of boosters.

Particularly, the cavitation bubbles will be generated and well-distributed in the whole volume of the molten metal, activating the melt acoustically.

In an embodiment, the method comprises the step of inserting the gas at a temperature from 200 and 500 °C.

### BRIEF DESCRIPTION OF THE DRAWINGS

The following figures provide preferred embodiments for illustrating the disclosure and should not be seen as limiting the scope of invention.
**Figure 1** is a perspective view of an embodiment of the device, an ultrasonic-assisted ladle having a long cylindrical shape connected to the piezoelectric transducer.
**Figure 2** is a perspective view of an embodiment of the device, ultrasonic-assisted ladle having a cylindrical shape with a channel connected to a long cylindrical shape and connected to the piezoelectric transducer.

### DETAILED DESCRIPTION

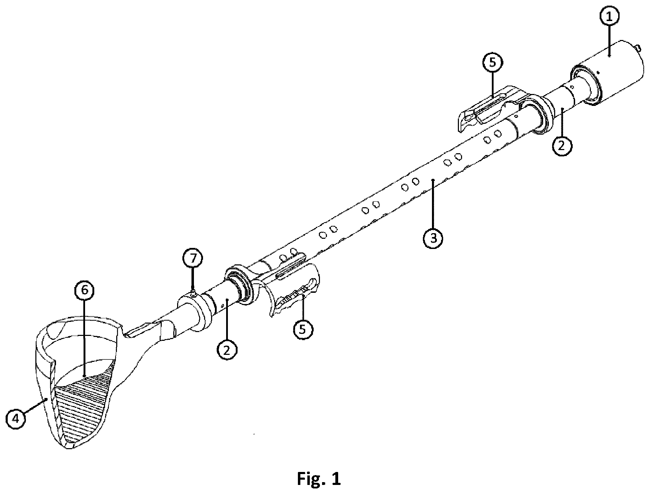

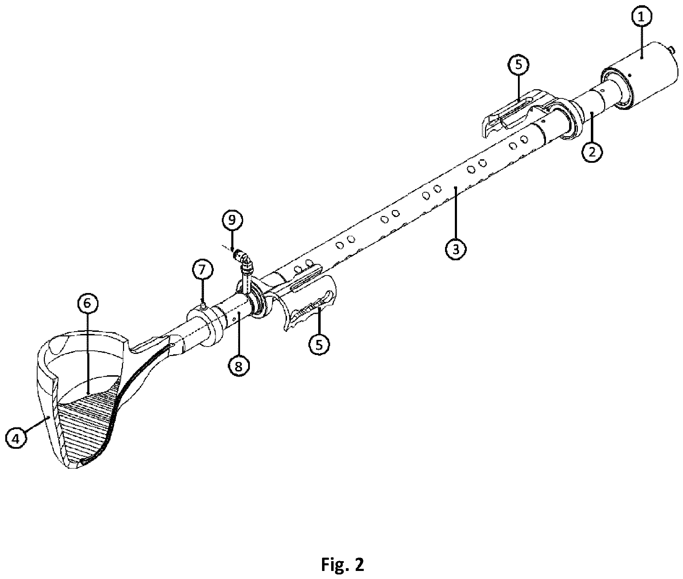

**Figure 1** shows a schematic representation of an embodiment of a device comprising the molten metal where **1** represents a transducer, preferably a piezoelectric transducer connected to an elongated handle comprising a booster represented by **2; 3** represents a waveguide, preferably having a cylindrical shape; **4** represents a ladle; **5** represents two handles, preferably two grips, for foundrymen to hold the device, being the grips positioned in nodal points of booster **2; 6** represents molten metal medium to be transported by the ladle, being the molten metal medium selected from an aluminium alloy, a magnesium alloy, a brass alloy, a Zamak alloy, among others, or their mixtures. Preferably the grips surround each end of booster **2** allowing the user to pick up and move the device; **7** represents a cooling ring. In another embodiment, **Figure 2** shows a schematic representation of an embodiment of a device where **8** represents a booster, which has a cylindrical shape, comprising an axial central channel that transports gas to the ladle **4,** allowing that a small amount of purge gas, at most 0.2 m³/h, inserted by a valve **9** (e.g., argon or nitrogen), alone or mixed with micro or nanoparticles, can be introduced by the central channel, enhancing the cavitation effect developed by the transmission of vibration from the transducer **1** to the molten metal medium **6.** In this embodiment, the gas bubbles introduced in the molten metal medium will break up into much smaller bubbles, homogeneously dispersed boosted by acoustic streamings thoroughly the whole volume contained in the ladle **4,** collecting the hydrogen and non-inclusions dissolved in the molten metal along their way, transporting them to the surface of the melt. This configuration can be useful for short cycles of pouring between castings where the fastness of molten metal treatment is required. A cooling ring **7** may be provided for surrounding the booster arranged between the waveguide and the ladle **2 or 8,** keeping the waveguide at low temperature by reducing heat transfer from molten metal to the other components (i.e. booster **2** or **8,** waveguide **3** and transducer **1**).

The embodiment of Figure 1 is very efficient for ensuring castings with a low level of porosity and a high level of refinement in different non-ferrous alloys, preferably aluminium alloy cast. However, mainly for short cycles of pouring between castings where the fastness of molten metal treatment is required, a small amount of purge gas can be inserted to accelerate treatment. Thus, a variation is presented, as shown in Figure 2, where the ladle **4** comprises a channel. The purge gas (e.g., argon or nitrogen) is inserted by valvule **9.** One of the purposes of using a small amount of purge gas of at most 0.2 m³/h, is to make the ultrasonically induced cavitation bubbles survive and rapidly multiply in the molten metal such that the technique can be faster.

Preferably, the channel is arranged from the second booster into the ladle, where the internal surface of the ladle comprises one hole for release the gas. The internal surface of the ladle is the surface that is in contact with the molten metal

With the embodiment where the device comprises the valve **9,** the acoustic intensity will be increased, contributing to dissolve, disperse, diminish, or integrate impurities and non-metallic inclusions into a molten metal alloy, which will be a less harmful problem in the mechanical properties of casted components.

Some authors suggest that conventional alloys themselves have reached their limit in terms of mechanical, considering that the Metal Matrix Composites (MMCs) is a promising solution to improve mechanical properties of light alloys. Thus, the embodiment of Fig. 2 can be used to insert a mix of gas purge with a certain amount of micro or nanoparticles, pre-heated at a temperature between 200 and 500 °C, preferably between 275 and 325 °C, into the molten metal under ultrasonic treatment. This method is feasible, avoiding problems with wettability or sedimentation of micro or nanoparticles with alloy base, surpassing all micro and nanoparticles insertion problems reported in the literature.

With the embodiment described in Fig. 2, it is possible to add certain alloying elements as Tin (Sn), Bismuth (Bi) and Lead (Pb) which can be dissolved faster and uniformly dispersed in the molten metal, promoting fabricate soft aluminium alloy matrix. This type of alloy can be used for specific applications that require high plasticity and brazing. Moreover, after producing ingots with these elements, they can be easily transformed in foils by the rolling process due to high plasticity and lower energy to rolling since such elements have a lower melting point (around 330 °C).

With the application of arrangements to molten metal treatment in individual and confined volume with the exact weight of melt to produce the component, the grain size and secondary phases will be rather reduced in size and uniformly distributed along the grain boundaries, allowing peak-ageing in lower artificial ageing times and with higher values of hardness.

In an embodiment, the waveguide **3** that is between two boosters, produces a uniform and homogeneous acoustic distribution of high intensity, allowing, in the proper domain of active vibration, to eliminate the creation of stationary waves, allowing the positioning of two handles **5** at the nodal planes of boosters, providing security and comfort for foundrymen to hold the device.

In an embodiment, the cooling ring **7** is arranged between the ladle **4** and the booster **2, 8.** The cooling ring **7** keeps the waveguide at low temperature by reducing heat transfer from molten metal to the other components.

In an embodiment, the cooling ring **7** comprises a refrigerated fluid.

In an embodiment, the cooling ring **7** is made of steel, preferably stainless steel.

In an embodiment, the ladle **4** is a half-spherical bowl, which is a conventional shape, connected to a waveguide having a cylindrical shape **3** with a diameter varying from 20 to 50 mm, preferably from 35 to 38 mm, and a wavelength from 4 to 14 half-wavelength (HWL), preferably from 8 to 12HWL, assisting in transferring the vibration amplified or not, through a booster **2, 8** with different amplification, i. e., 1:1, 1:1.5, 1:2 or 1.25, preferably 1.2 or 2.5, from a source which is a transducer **1** operating from 19 to 21 kHz, preferably from 19.5 to 20.5 kHz.

The ladle **4,** containing the molten metal alloy **6,** is optimized to operate in the same harmonic resonance frequency that the transducer**1**.

The disclosure apparatus has the capability to stimulate wideband sonic and ultrasonic energy, matching all components involved in the molten metal processing assisted by ultrasound.

In an embodiment, ladles are coated with a proper coating, preferably silicon-nitride plasma coating or Boron Nitride coating, making them ready to receive and treat the molten metal assisted by ultrasound with minimum wear gathering the cavitation and acoustic streaming phenomena arising due to the transmitted power and essential to ensure the treatment of molten metal in the minimum time possible.

In an embodiment, the ladle **4** is made in stainless steel 1.4749, Ti6Al4V or high-temperature refractory SiaLON.

In an embodiment, the ladle **4** has the capacity of transport 0.1 to 4 kg of molten metal, preferably from 0.5 to 1.5 kg.

In an embodiment, the ladle **4** is pre-heated using an electrical heating element or subject to flame during a certain time, thus preventing excessive cooling of the molten metal **6.**

In an embodiment, the aluminium alloy molten metal is collected from a crucible or holding furnace between a temperature of 680 - 720 °C, and subject to vibration in the ladle **4** during the processing cycle, corresponding to the component to be fabricated. The cycle time matches the period between the collection moment and the pouring of molten metal into the mould cavity built in steel or ceramic material.

In an embodiment, the magnesium alloy molten metal is collected from a crucible or furnace between a temperature of 650 - 680 °C, and subject to vibration in the ladle **4** during the processing cycle, corresponding to the component to be fabricated. The cycle time matches the period between the collection moment and the pouring of molten metal into the mould cavity built in steel.

In an embodiment, the bass alloy molten metal is collected from a crucible or furnace between a temperature of 950 - 1050 °C, and subject to vibration in the ladle **4** during the processing cycle, corresponding to the component to be fabricated. The cycle time matches the period between the collection moment and the pouring of molten metal into the mould cavity built in steel or ceramic material.

In an embodiment, the Zamak alloy molten metal is collected from a crucible or furnace between a temperature of 400 - 450 °C, and subject to vibration in the ladle **4** during the processing cycle, corresponding to the component to be fabricated. The cycle time matches the period between the collection moment and the pouring of molten metal into the mould cavity built in steel.

During the pouring stage, the metal will be continuously vibrated, which is one of the many advantages of this method, avoiding metal turbulence and consequently the appearance of porosity or inclusions. Therefore, the propagation of acoustic energy to the molten metal **6** is done directly through the ladle **4** interface, allowing pouring the melt at temperatures usually used in industry and more suitable to industrial practice implementation.

The term "comprising" whenever used in this document is intended to indicate the presence of stated features, integers, steps, components, but not to preclude the presence or addition of one or more other features, integers, steps, components or groups thereof.

It should be noted that the embodiments of the present disclosure is for the explanation of the present disclosure, and not for the limitation of the present invention. The scope of the present invention is defined in the appended claims.

## Claims

1. A device for ultrasonic treatment and transfer of molten metal by a user, comprising:
a ladle (4) for receiving the molten metal;
a transducer (1) for the production of ultrasonic vibration to produce cavitation bubbles in the molten metal;
a waveguide (3);
two handles (5) for the user to hold the device;
wherein the transducer (1) is connected to the ladle (4) through the waveguide for guiding the ultrasonic vibration from the transducer (1) to the ladle (4).

2. Device according to the previous claim wherein the two handles are two grips (5) arranged with the waveguide (3) in-between the two grips.

3. Device according to any of the previous claims wherein the transducer (1) is arranged for the production of a predetermined frequency ultrasonic vibration, and the length of the waveguide (3) is 4 - 14 half-wavelengths - HWL, more preferably 8 - 12 HWL, of the ultrasonic vibration.

4. Device according to any of the previous claims further comprising a booster (2) arranged between the transducer (1) and the waveguide (3) for ultrasonic vibration amplification.

5. Device according to any of the previous claims further comprising a further booster (2,8) between the waveguide (3) and the ladle (4) for ultrasonic vibration amplification.

6. Device according to any of the previous claims 4 and 5 wherein the two grips are arranged around the boosters (2, 8).

7. Device according to the previous claim wherein the two grips are around nodal planes of boosters.

8. Device according to claim 5 further comprising a cooling ring (7) arranged around the further booster (2,8) for reducing heat transfer from the ladle.

9. Device according to the previous claim further comprising a gas inlet and valve (9) placed on the booster arranged between the waveguide and the ladle , for inserting a purge gas.

10. Device according to the previous claim further comprising an internal channel for passing the gas from the valve to the ladle.

11. Device according to any of the previous claims wherein the waveguide (3) has a cylindrical shape with a diameter of 20 - 50 mm, preferably 35 - 38 mm.

12. Device according to any of the previous claims wherein the transducer (1) is configured to apply ultrasonic vibration with a frequency of 18 kHz - 22 kHz, preferably 19 kHz - 21 kHz, more preferably 19.5 kHz - 20.5 kHz.

13. Device according to any of the previous claims wherein the transducer (1) is a piezoelectric transducer.

14. Device according to any of the previous claims wherein the boosters are configured for amplifying the ultrasonic vibration from the transducer (2) to the waveguide and/or from the waveguide (3) to the ladle (4) by 1:1 to 1:2.5, preferably 1:2.0, more preferably 1:2.5.

15. Method of using the device according to any of the previous claims comprising the following steps:
pre-heating the ladle (4) at a temperature from 200 to 300 °C;
collecting the molten metal (6) with the ladle (4), from an holding furnace that is at a temperature ranging from 400 to 1050 °C;
activating the transducer (1) during transport for applying ultrasonic vibration, being the ultrasonic vibration guided to the ladle (4) by a waveguide (3), in order to produce cavitation bubbles in the molten metal (6) contained in the ladle (4);
pouring the molten metal in a mould cavity;
wherein the cavitation bubbles are generated and well-distributed in the molten metal, activating the melt acoustically.

## Patentansprüche

1. Eine Vorrichtung zur Ultraschallbehandlung und Übertragung von geschmolzenem Metall durch einen Benutzer, umfassend:
eine Gießpfanne (4) zur Aufnahme des geschmolzenen Metalls;
einen Wandler (1) zur Erzeugung von Ultraschallschwingungen, um Kavitationsblasen in dem geschmolzenen Metall zu erzeugen;
einen Hohlleiter (3);
zwei Griffe (5), an denen der Benutzer die Vorrichtung halten kann;
wobei der Wandler (1) mit der Gießpfanne (4) über den Hohlleiter verbunden ist, um die Ultraschallschwingung von dem Wandler (1) zu der Gießpfanne (4) zu leiten.

2. Vorrichtung nach dem vorangehenden Anspruch, wobei die beiden Griffe zwei Haltegriffe (5) sind, die so angeordnet sind, dass sich der Hohlleiter (3) zwischen den beiden Haltegriffen befindet.

3. Vorrichtung nach einem der vorangehenden Ansprüche, wobei der Wandler (1) so angeordnet ist, dass er eine Ultraschallschwingung mit einer vorbestimmten Frequenz erzeugt und die Länge des Hohlleiters (3) 4 - 14 Halbwellenlängen - HWL, bevorzugt 8 - 12 HWL, der Ultraschallschwingung beträgt.

4. Vorrichtung nach einem der vorangehenden Ansprüche, ferner umfassend einen Booster (2), der zwischen dem Wandler (1) und dem Hohlleiter (3) zur Verstärkung der Ultraschallschwingungen angeordnet ist.

5. Vorrichtung nach einem der vorangehenden Ansprüche, umfassend einen weiteren Booster (2, 8) zwischen dem Hohlleiter (3) und der Gießpfanne (4) zur Verstärkung der Ultraschallschwingungen.

6. Vorrichtung nach einem der vorangehenden Ansprüche 4 und 5, wobei die beiden Haltegriffe um die Booster (2, 8) herum angeordnet sind.

7. Vorrichtung nach dem vorangehenden Anspruch, wobei die beiden Haltegriffe um die Knotenebenen der Booster herum angeordnet sind.

8. Vorrichtung nach Anspruch 5, ferner umfassend einen Kühlring (7), der um den weiteren Booster (2, 8) herum angeordnet ist, um die Wärmeübertragung von der Gießpfanne zu verringern.

9. Vorrichtung nach dem vorangehenden Anspruch, ferner umfassend einen Gaseinlass und ein Ventil (9), die auf dem zwischen dem Hohlleiter und der Gießpfanne angeordneten Booster angeordnet sind, um ein Spülgas einzuführen.

10. Vorrichtung nach dem vorangehenden Anspruch, ferner umfassend einen internen Kanal für die Weiterleitung des Gases von dem Ventil zu der Gießpfanne.

11. Vorrichtung nach einem der vorangehenden Ansprüche, wobei der Hohlleiter (3) eine zylindrische Form mit einem Durchmesser von 20 - 50 mm, bevorzugt 35 - 38 mm, aufweist.

12. Vorrichtung nach einem der vorangehenden Ansprüche, wobei der Wandler (1) so konfiguriert ist, dass er Ultraschallschwingungen mit einer Frequenz von 18 kHz - 22 kHz, bevorzugt 19 kHz - 21 kHz, besonders bevorzugt 19,5 kHz - 20,5 kHz, erzeugt.

13. Vorrichtung nach einem der vorangehenden Ansprüche, wobei der Wandler (1) ein piezoelektrischer Wandler ist.

14. Vorrichtung nach einem der vorangehenden Ansprüche, wobei die Booster so konfiguriert sind, dass sie die Ultraschallschwingung des Wandlers (2) zu dem Hohlleiter und/oder von dem Hohlleiter (3) zu der Gießpfanne (4) um 1:1 bis 1:2,5, bevorzugt 1:2,0, besonders bevorzugt 1:2,5 verstärken.

15. Verfahren zur Verwendung der Vorrichtung nach einem der vorangehenden Ansprüche, umfassend die folgenden Schritte:
Vorheizen der Gießpfanne (4) auf eine Temperatur von 200 bis 300 °C;
Entnahme des geschmolzenen Metalls (6) mit der Gießpfanne (4) aus einem Warmhalteofen mit einer Temperatur von 400 bis 1050 °C;
Aktivieren des Wandlers (1) während des Transports zum Anlegen von Ultraschallschwingungen, wobei die Ultraschallschwingungen durch einen Hohlleiter (3) in die Gießpfanne (4) geleitet werden, um Kavitationsblasen in dem in der Gießpfanne (4) enthaltenen geschmolzenen Metall (6) zu erzeugen;
Gießen des geschmolzenen Metalls in eine Formkavität;
wobei die Kavitationsblasen in dem geschmolzenen Metall erzeugt und dort gut verteilt werden, wodurch die Schmelze akustisch aktiviert wird.

## Revendications

1. Un dispositif de traitement et de transfert de métal en fusion par ultrasons par un utilisateur, comprenant :
une poche (4) pour recevoir le métal en fusion ;
un transducteur (1) pour la production de vibrations ultrasoniques afin de produire des bulles de cavitation dans le métal en fusion ;
un guide d'ondes (3) ;
deux poignées (5) permettant à l'utilisateur de tenir l'appareil ;
dans lequel le transducteur (1) est connecté à la poche (4) à travers le guide d'ondes pour guider la vibration ultrasonique du transducteur (1) vers la poche (4).

2. Dispositif selon la revendication précédente, dans lequel les deux poignées sont deux prises (5) disposées avec le guide d'ondes (3) entre les deux prises.

3. Dispositif selon l'une quelconque des revendications précédentes, dans lequel le transducteur (1) est disposé pour la production d'une vibration ultrasonique de fréquence prédéterminée, et la longueur du guide d'ondes (3) est de 4 à 14 demi-longueurs d'ondes (HWL), plus préférablement de 8 à 12 HWL, de la vibration ultrasonique.

4. Dispositif selon l'une quelconque des revendications précédentes comprenant en outre un amplificateur (2) disposé entre le transducteur (1) et le guide d'ondes (3) pour l'amplification de la vibration ultrasonique.

5. Dispositif selon l'une quelconque des revendications précédentes comprenant en outre un amplificateur supplémentaire (2, 8) entre le guide d'ondes (3) et la poche (4) pour l'amplification de la vibration ultrasonique.

6. Dispositif selon l'une quelconque des revendications précédentes 4 et 5, dans lequel les deux prises sont disposées autour des amplificateurs (2, 8).

7. Dispositif selon la revendication précédente, dans lequel les deux prises se trouvent autour des plans nodaux des amplificateurs.

8. Dispositif selon la revendication 5 comprenant en outre un anneau de refroidissement (7) disposé autour de l'amplificateur supplémentaire (2, 8) pour réduire le transfert de chaleur de la poche.

9. Dispositif selon la revendication précédente comprenant en outre une entrée de gaz et une soupape (9) placées sur l'amplificateur disposé entre le guide d'ondes et la poche, pour l'introduction d'un gaz de purge.

10. Dispositif selon la revendication précédente comprenant en outre un canal interne pour faire passer le gaz de la soupape à la poche.

11. Dispositif selon l'une quelconque des revendications précédentes, dans lequel le guide d'ondes (3) a une forme cylindrique d'un diamètre de 20 à 50 mm, de préférence de 35 à 38 mm.

12. Dispositif selon l'une quelconque des revendications précédentes, dans lequel le transducteur (1) est configuré pour appliquer une vibration ultrasonique avec une fréquence de 18 kHz - 22 kHz, de préférence 19 kHz - 21 kHz, plus préférentiellement 19,5 kHz - 20,5 kHz.

13. Dispositif selon l'une quelconque des revendications précédentes, dans lequel le transducteur (1) est un transducteur piézoélectrique.

14. Dispositif selon l'une quelconque des revendications précédentes, dans lequel les amplificateurs sont configurés pour amplifier la vibration ultrasonique allant du transducteur (2) au guide d'ondes et/ou du guide d'ondes (3) à la poche (4) de 1:1 à 1:2,5, de préférence 1:2,0, plus préférentiellement 1:2,5.

15. Procédé d'utilisation du dispositif selon l'une quelconque des revendications précédentes comprenant les étapes suivantes:
préchauffer la poche (4) à une température de 200 à 300 °C ;
recueillir le métal en fusion (6) avec la poche (4), dans un four de maintien dont la température est comprise entre 400 et 1050 °C ;
activer le transducteur (1) pendant le transport pour appliquer une vibration ultrasonique, la vibration ultrasonique étant guidée vers la poche (4) par un guide d'ondes (3), afin de produire des bulles de cavitation dans le métal en fusion (6) contenu dans la poche (4) ;
verser le métal en fusion dans une cavité de moule ;
dans lequel les bulles de cavitation sont générées et bien réparties dans le métal en fusion, activant la matière fondue de manière acoustique.
